# EUROPEAN PATENT APPLICATION

(11) **EP 2 620 884 A2**
(43) Date of publication of application: **31.07.2013**
(21) Application number: 12198528.7
(22) Date of filing: 20.12.2012
(51) Int. Cl.: G06F 17/50

(54) **Predicted value calculation method and design support apparatus**

(30) Priority: 27.01.2012 JP 2012014985
(71) Applicant: FUJITSU LIMITED, Kawasaki-shi, Kanagawa 211-8588 (JP)
(72) Inventor: Furuya, Hiroyuki, Kawasaki-shi, Kanagawa 211-8588 (JP); Otsuka, Akihiro, Kawasaki-shi, Kanagawa 211-8588 (JP); Yamaguchi, Atsushi, Kawasaki-shi, Kanagawa 211-8588 (JP); Ueda, Akira, Kawasaki-shi, Kanagawa 211-8588 (JP); Nitta, Kazuhiro, Kawasaki-shi, Kanagawa 211-8588 (JP)
(74) Representative: Ward, James Norman

(57) **Abstract**

A design support apparatus includes an extraction unit that extracts component models having a connection relationship with a position specified inside a predetermined component model, from a plurality of component models that are hollow and are included in the three-dimensional model of a device to be designed, depending on whether each of the plurality of component models satisfies predetermined conditions on cross-sectional areas of the component models, and a calculation unit that calculates a predicted value of the acoustic characteristics of the component models extracted by the extraction unit.

## Description

### FIELD

The embodiments discussed herein are related to a predicted value calculation method and a design support apparatus.

### BACKGROUND

In acoustic products such as speakers, receivers, microphones of mobile terminal devices, acoustic characteristics vary depending on setting conditions. For example, with respect to speakers, it is known that, as the rear space (rear air chamber) of a speaker has a larger capacity, the resonance frequency becomes lower and the volume of low-frequency sound becomes larger. Therefore, at the design stage, the size of the rear air chamber is changed in order to adjust the acoustic characteristics.

One of known methods for predicting the acoustic characteristics of a structure is a Statistical Energy Analysis (SEA) method that divides a structure into a plurality of structural parts, and predicts vibration and noise of each part. Please see, for example, Japanese Unexamined Patent Publication No. 11-337402.

For example, in the case of employing the statistical energy analysis method for predicting acoustic characteristics, the vibration velocity of a structure needs to be measured at many points if the structure has many spaces to be checked. Therefore, this arises a problem in that a complicated process needs to be performed to predict acoustic characteristics.

Not only using the aforementioned statistical energy analysis method but also using a Finite Element Method (FEM)/Boundary Element Method (BEM), etc. has the same problem.

### SUMMARY

According to one aspect, the invention is intended to predict acoustic characteristics easily.

According to one embodiment, there is provided a predicted value calculation method to be executed by a computer. This method includes: extracting, by a processor, component models having a connection relationship with a position specified inside a predetermined component model from a plurality of component models which are hollow and are included in a three-dimensional model of a device to be designed, depending on whether each of the plurality of component models satisfies predetermined conditions on a cross-sectional area; and calculating, by the processor, a predicted value of acoustic characteristics of the extracted component models.

### BRIEF DESCRIPTION OF DRAWINGS

FIG. 1 illustrates a design support apparatus according to a first embodiment;
FIG. 2 illustrates a hardware configuration of a design support apparatus according to a second embodiment;
FIG. 3 is a functional block diagram of the design support apparatus according to the second embodiment;
FIG. 4 is a diagram for explaining how to extract spatial parts;
FIG. 5 is a diagram for explaining a process of a space dividing unit;
FIG. 6 is a diagram for explaining how to predict acoustic characteristics;
FIG. 7 is a flowchart of an entire process of the design support apparatus;
FIG. 8 is a flowchart of a space extraction process;
FIG. 9 is a flowchart of a space dividing process;
FIG. 10 is a flowchart of a space dividing position determination process;
FIG. 11 is a flowchart of an acoustic characteristics prediction process; and
FIG. 12 illustrates on example result of actual measurement of acoustic characteristics with changing the volume of a rear air chamber.

### DESCRIPTION OF EMBODIMENTS

Several embodiments will be described below with reference to the accompanying drawings, wherein like reference numerals refer to like elements throughout.

### (a) First Embodiment

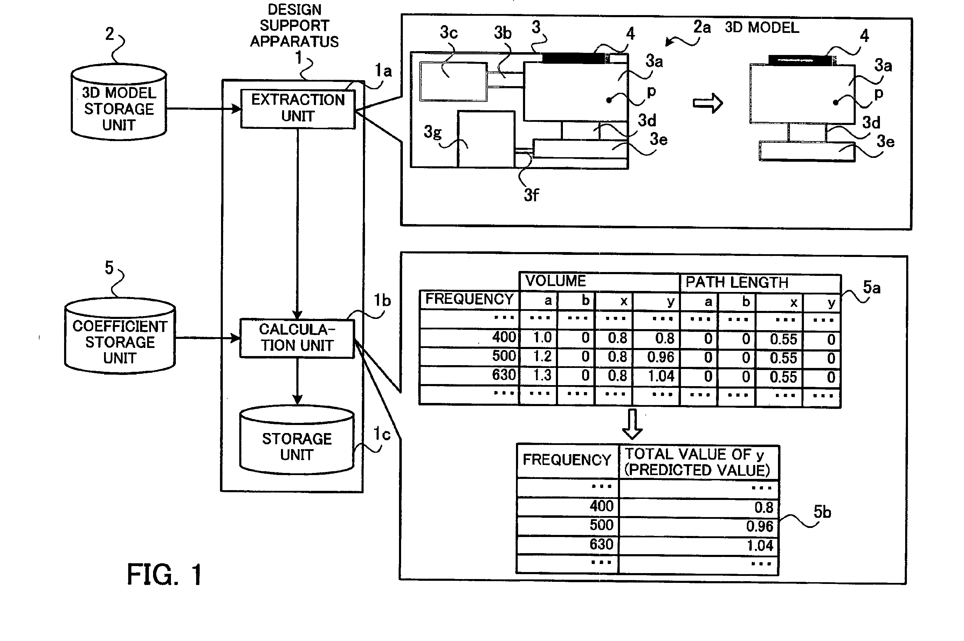

FIG. 1 illustrates a design support apparatus according to a first embodiment.

A design support apparatus (computer) 1 of the first embodiment includes an extraction unit 1a, calculation unit 1b, and storage unit 1c.

The extraction unit 1a reads a three-dimensional (3D) model 2a of a device to be designed, from a 3D model storage unit 2. The device to be designed may be, for example, a portable terminal device such as a portable telephone, etc. FIG. 1 illustrates a cross-sectional view of the 3D model 2a of a portable terminal device by way of example. The 3D model 2a includes a case model 3, and inside the case model 3, there are a speaker model 4, component model 3a adjacent to the speaker model 4, and component models 3b, 3c, 3d, 3e, 3f, and 3g connected to the component model 3a. All of the component models 3a to 3g are hollow.

In order to predict acoustic characteristics of the portable terminal device, a designer specifies a position p inside the component model 3a that is located adjacent to the speaker model 4 and is designed as a rear air chamber. Alternatively, the design support apparatus 1 may be designed to specify the position p by detecting the speaker model 4 with reference to attribute information of the 3D model 2a and then detecting the component model 3a adjacent to the speaker model 4.

The extraction unit 1a determines whether each component model satisfies predetermined conditions on a cross-sectional area, and extracts the component models 3a, 3d, and 3e which have a connection relationship with the position p. More specifically, the extraction unit 1a excludes, from being extracted, the component models 3b and 3f which have a part whose cross-sectional area is equal to or less than a first threshold and whose length is equal to or greater than a second threshold. The extraction unit 1a also excludes, from being extracted, the component model 3c connected to the component model 3a via the component model 3b and the component model 3g connected to the component model 3a via the component model 3f. As a result, the extraction unit 1a extracts the component models 3a, 3d, and 3e.

The first and second thresholds are set to desired values by the designer and are stored in a storage unit (not illustrated) of the design support apparatus 1. The first and second thresholds are set to, for example, but not limited to, such lower limit values that a component is expected not to function as a rear air chamber if the component has a part whose cross-sectional area is equal to or less than the first threshold and whose length is equal to or greater than the second threshold. For example, the first and second thresholds are set to 10 mm² and 40 mm, respectively, and to 1 mm² and 4 mm, respectively. This enables easy prediction of acoustic characteristics while reducing an influence on the acoustic characteristics as much as possible.

The calculation unit 1b calculates a predicted value to be used for predicting a sound pressure level (SPL), for each frequency of sound that is output from the speaker corresponding to the speaker model 4 of a product manufactured based on the 3D model 2a.

More specifically, the calculation unit 1b calculates parameters that have an influence on the acoustic characteristics, with respect to the component models 3a, 3d, and 3e extracted by the extraction unit 1a. The parameters to be calculated include the volume, surface area, thickness (path length), perimeter length of an internal space, the cross-sectional area of an opening, etc. with respect to each component model 3a, 3d, and 3e. FIG. 1 illustrates a table 5a that contains coefficients a and b for each frequency, which are obtained by the calculation unit 1 from a coefficient storage unit 5, and as parameters x, the volume and path length of an internal space calculated by the calculation unit 1b. The parameter x column with respect to the volume contains 0.8 cc. The parameter x column with respect to the path length contains 0.55 mm. When the coefficients a and b and parameter x are obtained, the y column is blank.

Then, the calculation unit 1b calculates a predicted value to be used for predicting an SPL, by using the coefficients a and b and parameter x stored in the table 5a. More specifically, the calculation unit 1 substitutes the coefficients a and b and parameter x in a predetermined calculation formula. In this embodiment, it is assumed that the volume and SPL have a proportional relationship, and the calculation formula for calculating a predicted value for the prediction of the SPL from the volume is y=ax+b. In addition, it is assumed that the path length and SPL have a proportional relationship, and the calculation formula for calculating a predicted value for the prediction of the SPL from the path length is y=ax+b.

The calculation unit 1b obtains y value for each frequency by substituting values in the calculation formula with respect to each of the volume and path length. The calculation unit 1b then adds the calculated y values for each frequency. The calculated total value is taken as a predicted value of the SPL for each frequency in the 3D model 2a. The calculation unit 1b displays the calculated predicted values of the SPL in the table 5b, and also stores the calculated predicted values of the SPL in the storage unit 1c.

As described above, this design support apparatus 1 extracts continuous component models under the conditions on a cross-sectional area, and obtains predicted values to be used for predicting an SPL for each frequency by using the parameters of the extracted component models. This approach makes it possible to predict an SPL when creation of the 3D model 2a is completed.

Further, the above approach does not employ an analysis method such as FEM, BEM, SEA, or the like. This enables a designer who has no knowledge of these analysis methods to predict acoustic characteristics. In addition, it is possible to predict the acoustic characteristics in a shorter period as compared with the case of using an analysis method such as FEM/BEM, SEA, or the like.

Still further, even when component models are in complicated shapes, setting appropriate first and second thresholds makes it possible to identify and extract appropriate component models.

The extraction unit 1a and calculation unit 1b are realized by the functions of a Central Processing Unit (CPU) provided in the design support apparatus 1.

The storage unit 1c, 3D model storage unit 2, and coefficient storage unit 5 are realized by using data storage areas in a Random Access Memory (RAM), Hard Disk Drive (HDD), or the like.

The following describes the disclosed design support apparatus more concretely in a second embodiment.

### (b) Second Embodiment

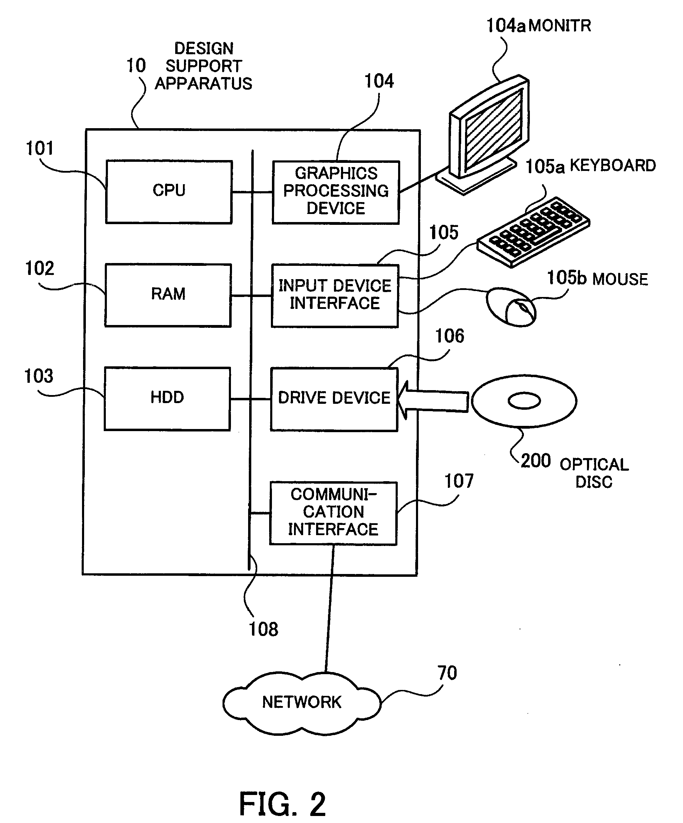

FIG. 2 illustrates a hardware configuration of a design support apparatus according to the second embodiment.

The design support apparatus 10 is entirely controlled by a CPU 101. A RAM 102 and a plurality of peripheral devices are connected to the CPU 101 via a bus 108.

The RAM 102 is used as a main memory device of the design support apparatus 10. The RAM 102 temporarily stores at least part of Operating System (OS) programs and application programs to be executed by the CPU 101. The RAM 102 also stores various data to be used while the CPU 101 operates.

Connected to the bus 108 are a hard disk drive (HDD) 103, graphics processing device 104, input device interface 105, drive device 106, and communication interface 107.

The HDD 103 magnetically writes and reads data on an internal disk. The HDD 103 is used as a secondary storage device of the design support apparatus 10. The HDD 103 stores the OS programs, application programs, and various data. In this connection, a flash memory or another kind of semiconductor storage device may be used as a secondary storage device.

A monitor 104a is connected to the graphics processing device 104. The graphics processing device 104 displays an image on the screen of the monitor 104a under the control of the CPU 101. As the monitor 104a, a display device using Cathode Ray Tube (CRT) or a liquid crystal display device may be used.

A keyboard 105a and mouse 105b are connected to the input device interface 105. The input device interface 105 transfers signals from the keyboard 105a and mouse 105b to the CPU 101. The mouse 105b is one example of a pointing device, and another kind of pointing device such as a touch panel, tablet, touchpad, or trackball may be used.

The drive device 106 reads data from a portable recording medium. Portable recording media include an optical disc on which data is recorded so as to be read with reflection of light, a Universal Serial Bus (USB) memory, etc. For example, when an optical drive device is used as the drive device 106, data is read from an optical disc 200 using laser light. Optical discs 200 include Blu-ray (registered trademark), Digital Versatile Disc (DVD), DVD-RAM, Compact Disc Read Only Memory (CD-ROM), CD-R (Readable)/RW (ReWritable), etc.

The communication interface 107 is connected to a network 70. The communication interface 107 performs data communications with another computer or communication apparatus via the network 70.

The processing functions of this embodiment are realized by using the above hardware components.

The design support apparatus 10 having the hardware components of FIG. 2 is provided with the following functions.

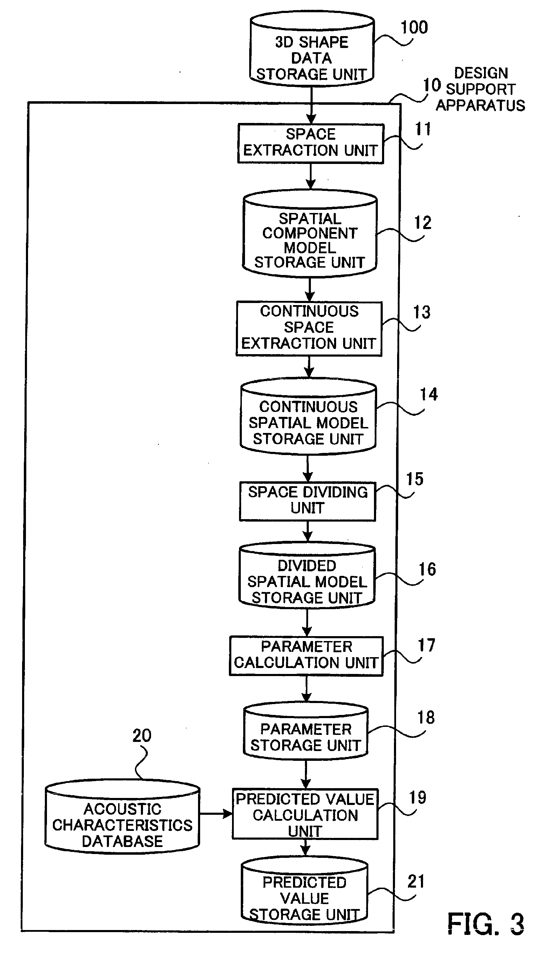

FIG. 3 is a functional block diagram of a design support apparatus according to the second embodiment.

The design support apparatus 10 includes a space extraction unit 11, spatial component model storage unit 12, continuous space extraction unit 13, continuous spatial model storage unit 14, space dividing unit 15, divided spatial model storage unit 16, parameter calculation unit 17, parameter storage unit 18, predicted value calculation unit 19, acoustic characteristics database 20, and predicted value storage unit 21.

The space extraction unit 11 extracts spatial parts of an electronic device to be designed, from the 3D model of the electronic device which is stored in a 3D shape data storage unit 100, at a design stage.

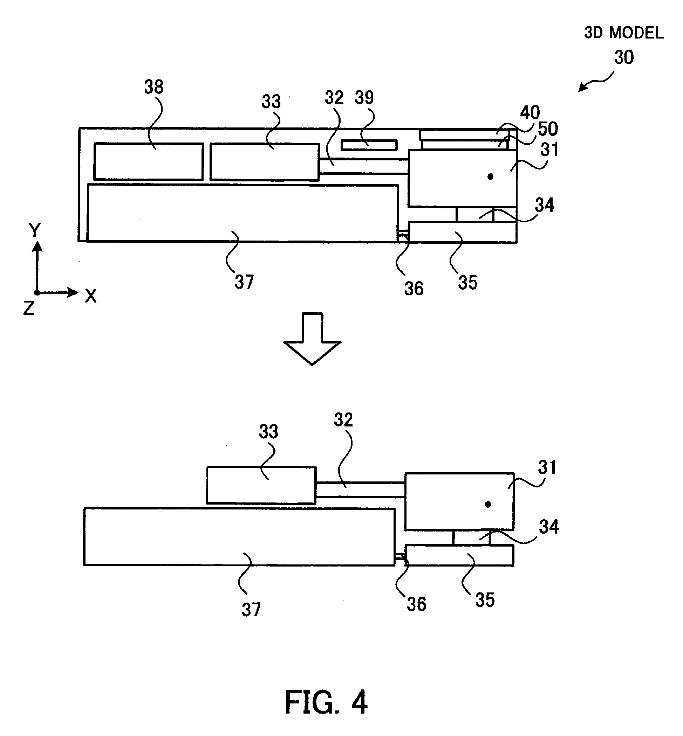

FIG. 4 is a diagram for explaining how to extract spatial parts.

The space extraction unit 11 creates a 3D mesh. The space extraction unit 11 then divides a 3D model 30 into voxels (cube of predetermined volume) generated using the created mesh, and determines whether each voxel is a voxel that constitutes a component of the 3D model 30 or a voxel that constitutes a space formed in the 3D model 30. For example, if a ratio of a component to the volume of a generated voxel is equal to or greater than a set value, the space extraction unit 11 recognizes the voxel as a voxel that constitutes the component. If a ratio of a component to the volume of a voxel is less than the set value, the space extraction unit 11 recognizes the voxel as a voxel that constitutes a space.

The space extraction unit 11 extracts a set of voxels recognized as voxels that constitute a space. Hereinafter, a component model that internally has a set of voxels extracted by the space extraction unit 11 is referred to as "spatial component model". The space extraction unit 11 determines spatial component models by distinguishing the spatial component models from components other than the spatial component models, and stores the spatial component models in the spatial component model storage unit 12. In this connection, instead of the voxel-based dividing, tetra-based dividing may be applied.

In the 3D model 30 illustrated in FIG. 4, a hollow spatial component model 31 is formed on an opposite side to a sound output unit of a speaker model 50. The spatial component model 31 is provided to serve as a rear air chamber. In addition to the spatial component model 31, spatial component models 32 to 40 are formed. Each of the spatial component models 31 to 40 is a cuboid. The surface of each spatial component model 31 to 40 is represented by triangular polygons.

When the designer makes a command to display spatial component models stored in the spatial component model storage unit 12, with a keyboard 105a and mouse 105b, the continuous space extraction unit 13 clips the cross sections of the spatial component models stored in the spatial component model storage unit 12, and paints and displays the spatial component models having the clipped cross sections on the monitor 104a.

The continuous space extraction unit 13 extracts, in response to specification of a target spatial position by the designer, a continuous space including the specified position. To specify a spatial position, the following methods are considered: (i) when the designer specifies a component and a surface of a speaker model 50 or the like, the continuous space extraction unit 13 searches for spatial meshes that are continued from spatial meshes that are in contact with the specified surface; (ii) when the designer specifies 3D coordinates, the continuous space extraction unit 13 searches for spatial meshes that are continued from spatial meshes that are in contact with the specified coordinates; and (iii) when the designer specifies a cross section from the 3D model displayed on the monitor 104a and then specifies a point in the cross section, the continuous space extraction unit 13 searches for spatial meshes that are continued from spatial meshes that are in contact with the specified point.

The continuous space extraction unit 13 extracts spatial component models which form a continuous space with one of these methods (i) to (iii). The continuous space extraction unit 13 then generates a spatial component model (hereinafter, referred to as a continuous spatial model) including the extracted spatial component models, and stores the generated continuous spatial model in the continuous spatial model storage unit 14.

Referring to FIG. 4, the inside of the spatial component model 31 adjacent to the speaker model 50 is specified as a spatial position by way of example. The continuous space extraction unit 13 extracts the spatial component model 31 and the spatial component models 32 to 37 that are continued from the spatial component model 31. These spatial component models 32 to 37 extracted by the continuous space extraction unit 13 are components that have a possibility of functioning as a rear air chamber of the speaker model 50. The continuous space extraction unit 13 generates a continuous spatial model that includes the extracted spatial component models 32 to 37 as well as the spatial component model 31, and stores the generated continuous spatial component model in the continuous spatial model storage unit 14.

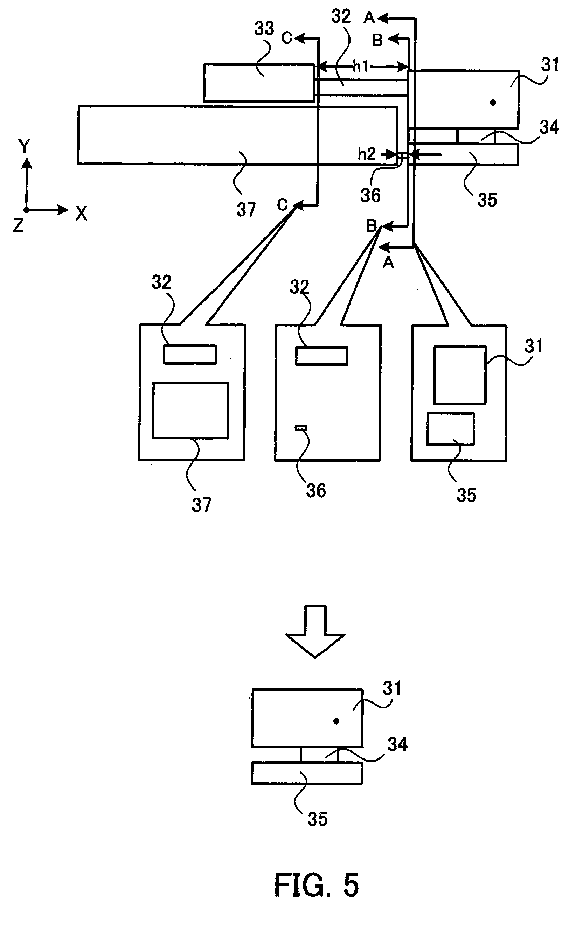

FIG. 5 is a diagram for explaining a process of a space dividing unit.

The space dividing unit 15 extracts spatial component models that probably operate as a rear air chamber (that is expected to serve as a rear air chamber), from the spatial component models 31 to 37 extracted by the continuous space extraction unit 13.

More specifically, the space dividing unit 15 generates a cross section at predetermined intervals in each of the x-, y-, and z-axis directions with respect to the spatial component models 31 to 37 stored in the continuous spatial model storage unit 14.

A cross section taken along line A-A, a cross section taken along line B-B, and a cross section taken along line C-C illustrated in FIG. 5 are ones of cross sections in y-z plane generated at predetermined intervals in the X-axis direction.

The space dividing unit 15 determines whether each cross section satisfies dividing conditions, in order from a spatial component model closest to the specified position out of the spatial component models 31 to 37. The dividing conditions are that the area of a cross section is equal to or less than a predetermined first threshold and the length of a part having the small cross section (hereinafter, referred to as small-cross-section length) is equal to or greater than a predetermined second threshold. A spatial component model satisfying the dividing conditions is excluded from being extracted, when a first, last, or middle cross section of the spatial component model is checked or a position having a predetermined space ratio is checked. As a result, spatial component models that probably operate as a rear air chamber are extracted. In this connection, for example, the first and second thresholds may be set to 10 mm² and 40 mm, respectively, and to 1 mm² and 4 mm, respectively. These thresholds may be determined by the designer and stored in the RAM 102 or the like.

In this embodiment, assume that the spatial component models 31, 34, and 35 do not satisfy the dividing conditions.

In addition, assume that the cross-sectional area of the spatial component model 32 taken along line B-B is 8 mm² and the straight length h1 of the spatial component model 32 is 50 mm. In this case, the spatial component model 32 is considered to satisfy the dividing conditions where the cross-sectional area is equal to less than the predetermined first threshold of 10 mm² and the small-cross-section length is equal to or greater than the predetermined second threshold of 40 mm. Therefore, having a part whose cross-sectional area is equal to or less than the first threshold and whose length is equal to or greater than the second threshold, this spatial component model 32 is excluded from being extracted. The spatial component model 33 that is connected to the spatial component model 31 via the spatial component model 32 is also excluded from being extracted.

Further, assume that the cross-sectional area of the spatial component model 36 taken along line B-B is 0.5 mm² and the straight length h2 of the spatial component model 36 is 6 mm. In this case, the spatial component model 36 is considered to satisfy the dividing conditions where the cross-sectional area is equal to or less than the predetermined first threshold of 1 mm² and the small-cross-section length is equal to or greater than the predetermined second threshold of 4 mm. Therefore, having a part whose cross-sectional area is equal to or less than the first threshold and whose length is equal to or greater than the second threshold, this spatial component model 36 is excluded from being extracted. The spatial component model 37 that is connected to the spatial component model 31 via the spatial component model 36 is also excluded from being extracted.

As a result, the space dividing unit 15 extracts the spatial component models 31, 34, and 35 which are not excluded from being extracted.

The space dividing unit 15 then stores the spatial component models 31, 34, and 35 in the divided spatial model storage unit 16.

Referring back to FIG. 3, the parameter calculation unit 17 calculates the volume, surface area, thickness (path length), and perimeter length of an internal space, and the cross-sectional area of an opening, as parameters with respect to each of the spatial component models 31, 34, and 35 stored in the divided spatial model storage unit 16. These parameters are calculated based on the voxels of the spatial component models 31, 34, and 35 extracted by the space dividing unit 15. The parameter calculation unit 17 stores the calculated parameters in the parameter storage unit 18.

The predicted value calculation unit 19 calculates a predicted value of acoustic characteristics by using the parameters stored in the parameter storage unit 18.

More specifically, the designer, etc. produces a calculation formula for predicting acoustic characteristics based on the relationships between a parameter and SPL obtained through experiments and theoretical formulas of the parameter and SPL, and stores the produced calculation formula in a tabular form in the acoustic characteristics database 20. In the case where parameters have correlations, the calculation formula is produced with taking the correlations into consideration. For example, a relational expression such as y=ax+b is produced based on experiments and theoretical formulas, where x represents a parameter and y indicates an SPL [dB] that is derived from the parameter.

With respect to parameters having correlations, the y values for the respective parameter are not added simply, but the calculation is performed with taking the correlations into consideration, which is not exemplified in this embodiment.

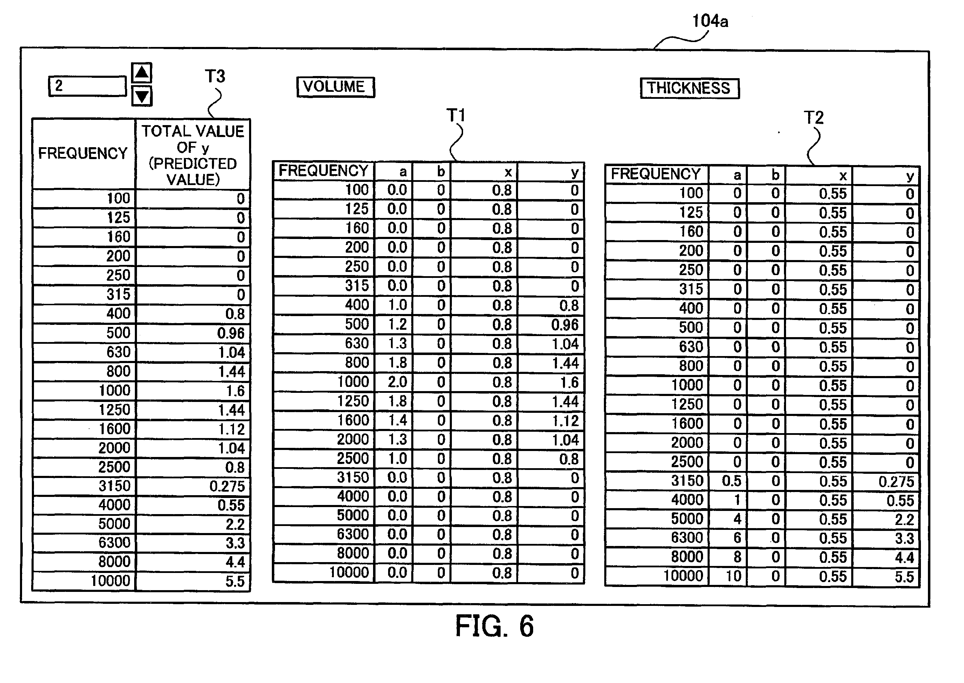

FIG. 6 is a diagram for explaining how to calculate a predicted value of acoustic characteristics.

The parameters illustrated in FIG. 6 are parameters on the volume and thickness of an internal space.

The predicted value calculation unit 19 reads tables T1 and T2 for calculation formulas relating to volume and spatial thickness, from the acoustic characteristics database 20. In the read tables T1 and T2, values are previously set in the columns for frequency, a, and b.

The predicted value calculation unit 19 sets a parameter on the volume stored in the parameter storage unit 18, in the x column of the table T1, and then calculates the relational expression, y=ax+b, with respect to the volume. In addition, the predicted value calculation unit 19 sets a parameter on the thickness stored in the parameter storage unit 18, in the x column of the table T2, and then calculates the relational expression, y=ax+b, with respect to the spatial thickness.

The predicted value calculation unit 19 adds all y values obtained from the relational expression, for each frequency. The calculated total value is taken as a predicted value of the SPL for each frequency. The predicted value calculation unit 19 displays the calculated predicted values of the SPL in the table T3, and also stores the calculated predicted values of the SPL in the predicted value storage unit 21.

The following describes the processes of the design support apparatus 10 with reference to flowcharts.

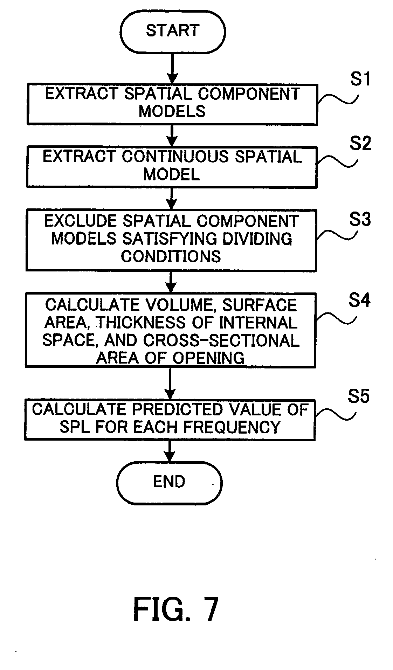

FIG. 7 is a flowchart of an entire process of the design support apparatus.

At step S1, the space extraction unit 11 extracts spatial component models in the 3D model 30, and stores the extracted spatial component models in the spatial component model storage unit 12. Then, the process proceeds to step S2.

At step S2, the continuous space extraction unit 13 extracts a continuous spatial model, and stores the extracted continuous spatial model in the continuous spatial model storage unit 14. Then, the process proceeds to step S3.

At step S3, the space dividing unit 15 excludes spatial component models that satisfy the above-described dividing conditions using the first threshold and second threshold, from the continuous spatial model stored in the continuous spatial model storage unit 14, and stores the remaining spatial component models in the divided spatial model storage unit 16. Then, the process proceeds to step S4.

At step S4, the parameter calculation unit 17 calculates the volume, surface area, thickness of an internal space, and the cross-sectional area of an opening, with respect to each spatial component model stored in the divided spatial model storage unit 16, and then stores the calculated data in the parameter storage unit 18. Then, the process proceeds to step S5.

At step S5, the predicted value calculation unit 19 calculates a predicted value of the SPL for each frequency with the data stored in the parameter storage unit 18 and the data stored in the acoustic characteristics database 20, and stores the calculated predicted value of the SPL in the predicted value storage unit 21. Then, the process of FIG. 7 is completed.

The following describes the process of step S1 in more detail.

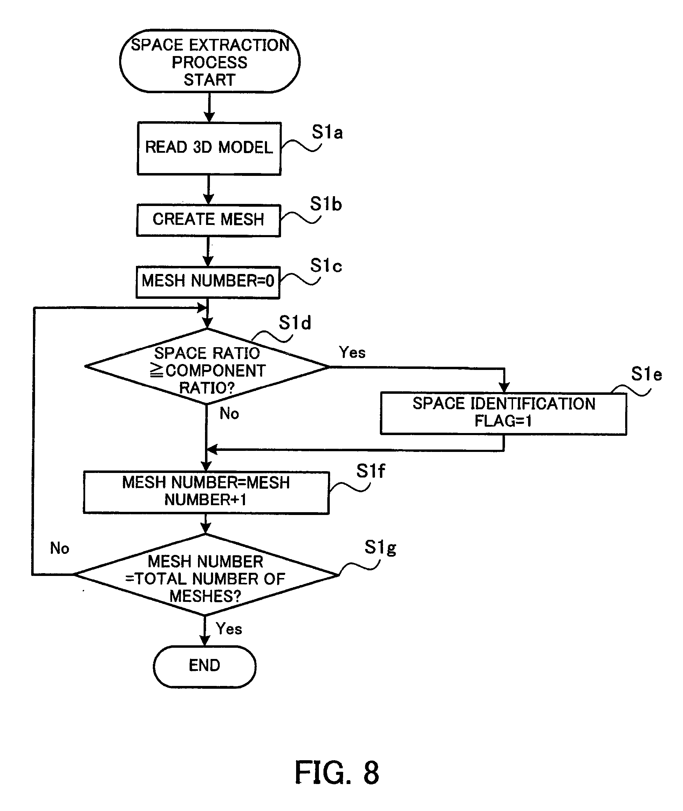

FIG. 8 is a flowchart of a space extraction process.

At step S1a, the space extraction unit 11 reads the 3D model 30 from the 3D shape data storage unit 100. Then, the process proceeds to step S1b.

At step S1b, the space extraction unit 11 creates a 3D mesh to be used for generating voxels, by using the 3D model 30 read at step S1a. Then, the process proceeds to step S1c.

At step S1c, the space extraction unit 11 sets the mesh number of a mesh to be processed to 0. Then, the process proceeds to step S1d.

At step S1d, the space extraction unit 11 determines whether a space ratio of the mesh having the mesh number in question is equal to or greater than a component ratio of the mesh. If the space ratio of the mesh having the mesh number in question is equal to or greater than the component ratio (yes at step S1d), the process proceeds to step S1e. Otherwise (no at step S1d), the process proceeds to step S1f.

At step S1e, the space extraction unit 11 sets a space identification flag for the mesh number in question to 1. Then, the process proceeds to step S1f.

At step S1f, the space extraction unit 11 increments the mesh number in question. Then, the process proceeds to step S1g.

At step S1g, the space extraction unit 11 determines whether the mesh number in question reaches the total number of meshes. If the mesh number in question reaches the total number of meshes (yes at step S1g), the process of FIG. 8 is completed. Otherwise (no at step S1g), the process proceeds back to step S1d.

Now, the explanation for the space extraction process is completed.

The following describes the process (space dividing process) of the space dividing unit 15 of step S3 in more detail.

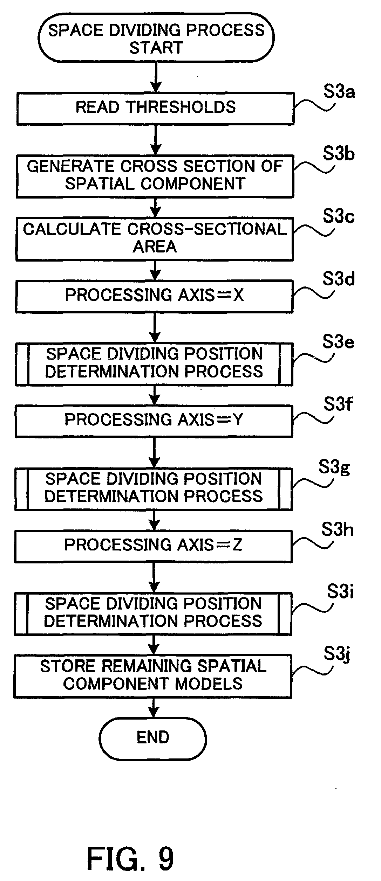

FIG. 9 is a flowchart of a space dividing process.

At step S3a, the space dividing unit 15 reads the first and second thresholds. Then, the process proceeds to step S3b.

At step S3b, the space dividing unit 15 generates a cross section of a spatial component model at predetermined slicing intervals in each of the x-, y-, and z-axis directions. Then, the process proceeds to step S3c.

At step S3c, the space dividing unit 15 calculates the area of each cross section of each spatial component model extracted by the continuous space extraction unit 13. Then, the process proceeds to step S3d.

At step S3d, the space dividing unit 15 selects an x-axis as a processing axis. Then, the process proceeds to step S3e.

At step S3e, the space dividing unit 15 performs a space dividing position determination process with respect to the x-axis, thereby excluding spatial component models satisfying dividing conditions. Then, the process proceeds to step S3f. In this connection, this space dividing position determination process will be described later.

At step S3f, the space dividing unit 15 selects a y-axis as a processing axis. Then, the process proceeds to step S3g.

At step S3g, the space dividing unit 15 performs the space dividing position determination process with respect to the y-axis, thereby excluding spatial component models satisfying the dividing conditions. Then, the process proceeds to step S3h.

At step S3h, the space dividing unit 15 selects a z-axis as a processing axis. Then, the process proceeds to step S3i.

At step S3i, the space dividing unit 15 performs the space dividing position determination process with respect to the z-axis, thereby excluding spatial component models satisfying the dividing conditions. Then, the process proceeds to step S3j.

At step S3j, the space dividing unit 15 stores the spatial component models remaining after steps S3e, S3g, and S3i, in the divided spatial model storage unit 16. Then, the process of FIG. 9 is completed.

Now, the explanation for the process of FIG. 9 is completed.

The following describes the space dividing position determination process of steps S3e, S3g, and S3i.

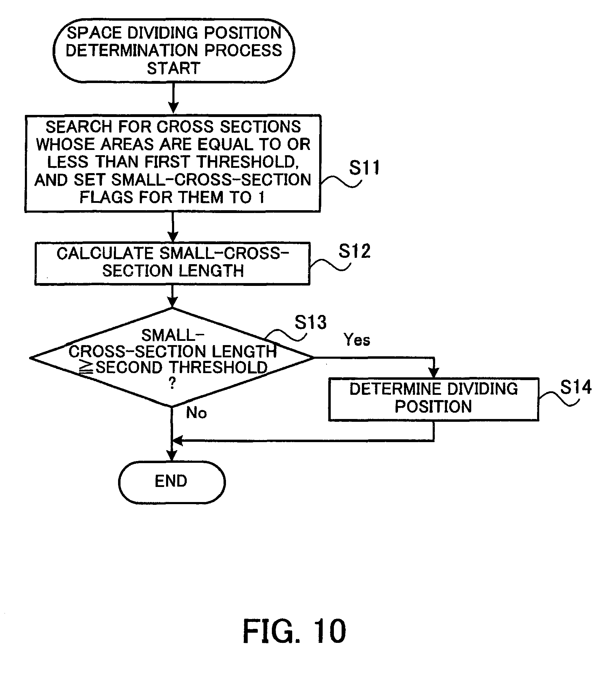

FIG. 10 is a flowchart of a space dividing position determination process.

At step S11, the space dividing unit 15 searches for cross sections whose areas are equal to or less than the first threshold, and sets small-cross-section flags for the detected cross sections to 1. Then, the process proceeds to step S12.

At step S12, the space dividing unit 15 calculates a small-cross-section length of a part having the cross sections for which the small-cross-section flags have been set to 1 (hereinafter, these cross sections are referred to as small cross sections). More specifically, in the case where there are some continuous small cross sections, the space dividing unit 15 calculates the small-cross-section length by multiplying the number of continuous small cross sections by the length of an interval. Then, the process proceeds to step S13.

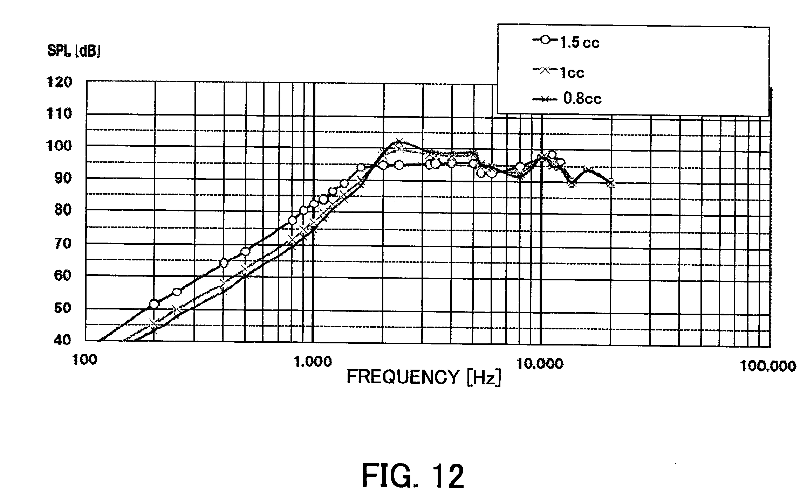

At step S13, the space dividing unit 15 determines whether the small-cross-section length is equal to or greater than the second threshold. If the small-cross-section length is equal to or greater than the second threshold (yes at step S13), the process proceeds to step S14. Otherwise (no at step S13), the process of FIG. 12 is completed.

At step S14, the space dividing unit 15 determines a cross section as a dividing position, according to a dividing position ratio. Then, the process of FIG. 10 is completed.

The following describes the process of step S5 that is performed by the predicted value calculation unit 19 in more detail.

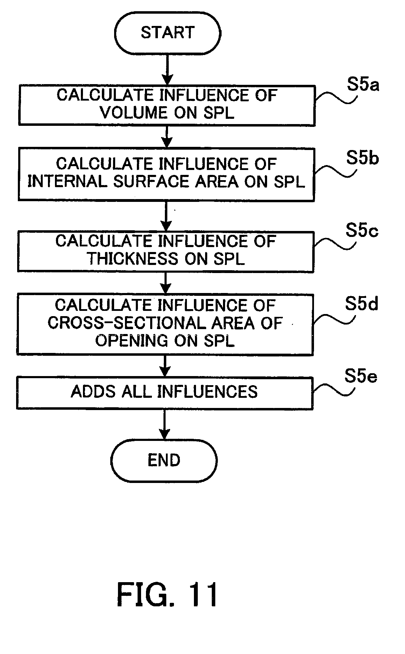

FIG. 11 is a flowchart of an acoustic characteristics prediction process.

At step S5a, the predicted value calculation unit 19 calculates how much influence the volume of a spatial component model has on an SPL, using the parameter on the volume of the spatial component model stored in the parameter storage unit 18. More specifically, the predicted value calculation unit 19 reads a relational expression of a volume and SPL from the acoustic characteristics database 20. Then, the predicted value calculation unit 19 calculates the influence of the volume on the SPL by substituting the parameter on the volume stored in the parameter storage unit 18 in the relational expression. Then, the process proceeds to step S5b.

At step S5b, the predicted value calculation unit 19 calculates how much influence the internal surface area of the spatial component model has on an SPL, using the parameter on the internal surface area of the spatial component model stored in the parameter storage unit 18. More specifically, the predicted value calculation unit 19 reads a relational expression of an internal surface area and SPL from the acoustic characteristics database 20. Then, the predicted value calculation unit 19 calculates the influence of the internal surface area on the SPL by substituting the parameter on the internal surface area stored in the parameter storage unit 18 in the relational expression. Then, the process proceeds to step S5c.

At step S5c, the predicted value calculation unit 19 calculates how much influence the thickness of the spatial component model has on an SPL, using the parameter on the thickness of the spatial component model stored in the parameter storage unit 18. More specifically, the predicted value calculation unit 19 reads a relational expression of a thickness and SPL from the acoustic characteristics database 20. Then, the predicted value calculation unit 19 calculates the influence of the thickness on the SPL by substituting the parameter on the thickness stored in the parameter storage unit 18 in the relational expression. Then, the process proceeds to step S5d.

At step S5d, the predicted value calculation unit 19 calculates how much influence the cross-sectional area of an opening of the spatial component model has on an SPL, using the parameter on the cross-sectional area of the opening of the spatial component model stored in the parameter storage unit 18. More specifically, the predicted value calculation unit 19 reads a relational expression of the cross-sectional area of an opening and SPL from the acoustic characteristics database 20. Then, the predicted value calculation unit 19 calculates the influence of the cross-sectional area of the opening on the SPL by substituting the parameter on the cross-sectional area of the opening stored in the parameter storage unit 18 in the relational expression. Then, the process proceeds to step S5e.

At step S5e, the predicted value calculation unit 19 adds the influences obtained at steps S5a to S5d. Then, the process of FIG. 11 is completed.

As described above, this design support apparatus 10 extracts spatial component models which do not satisfy dividing conditions, from a continuous spatial model extracted from the 3D model of a device to be designed, obtains the parameters of the extracted spatial component models, and calculates a predicted value of the SPL with the obtained parameters with respect to the extracted spatial component models. This enables prediction of acoustic characteristics at the design stage.

Further, the above approach does not use an analysis method such as FEM/BEM, SEA, or the like. This enables a designer who has no knowledge of these analysis methods to predict acoustic characteristics. In addition, it is possible to predict an SPL in a shorter period as compared with the case of using an analysis method such as FEM/BEM, SEA, or the like.

Still further, even when spatial component models are in complicated shapes, setting appropriate first and second thresholds for dividing makes it possible to extract component models that probably operate as a rear air chamber.

### (c) Third Embodiment

The following describes a design support apparatus according to a third embodiment.

The following mainly describes different features of the design support apparatus of the third embodiment from that of the second embodiment, and the same features will not be described again.

The design support apparatus of the second embodiment and the design support apparatus of the third embodiment calculate a predicted value of an SPL in different manners.

Data stored in an acoustic characteristics database 20 of this embodiment is a database that indicates relationships between frequency and SPL for each volume of a rear air chamber based on actual measurement values. For example, this database is created as follows.

First, a jig provided with a speaker and a rear air chamber which is arranged adjacent to the speaker and whose various parameters such as a volume are desirably changeable. Then, sound that a microphone placed near the jib receives from the speaker is measured and recorded, with changing the various parameters such as the volume of an internal space of the rear air chamber of the jig. For example, a database that indicates relationships between frequency and SPL is created for the case where the volume of the internal space is set to 45 cc, 5 cc, 3 cc, 1.5 cc, and 1 cc, and is stored in the acoustic characteristics database 20.

FIG. 12 illustrates one example result of actual measurement of acoustic characteristics with changing the volume of a rear air chamber.

The predicted value calculation unit 19 calculates a predicted value of acoustic characteristics with the parameters stored in a parameter storage unit 18, through compensation calculation with reference to a database stored in the acoustic characteristics database 20. For example, in the case where 0.8 cc is stored in the parameter storage unit 18 as the volume of a rear air chamber that is spatial component model 31, 34, and 35, a predicted value of the SPL for the volume of 0.8 cc is calculated through compensation calculation based on the relationships between frequency and SPL with respect to the volumes of 1 cc and 1.5 cc, which are stored in the acoustic characteristics database 20.

The design support apparatus of the third embodiment produces the same effect as that of the second embodiment.

In this connection, the process performed by the design support apparatus 10 may be performed by a plurality of apparatuses in a distributed manner. For example, one apparatus may be designed to perform processes up to calculation of parameters and store the calculated parameters in the parameter storage unit 18, and another apparatus may be designed to perform a process of calculating a predicted value of acoustic characteristics with the parameters.

Heretofore, the predicted value calculation methods and design support apparatuses according to the illustrated embodiments have been described, but are not limited thereto. The described components may be replaced with other components having equivalent functions or may include other components or processing operations. In addition, desired two or more configurations (features) in the embodiments may be combined.

The above processing functions can be realized by using a computer. In this case, a program is prepared, which describes processes for the functions of the design support apparatus 1 and 10. A computer realizes the above processing functions by executing the program. The program describing the intended processes may be recorded on a computer-readable recording medium. Computer-readable recording media include magnetic recording devices, optical discs, magneto-optical recording media, semiconductor memories, etc. The magnetic recording devices include Hard Disk Drives, Flexible Disks (FD), Magnetic Tapes, etc. The optical discs include DVDs, DVD-RAMs, CD-ROM/RW, etc. The magneto-optical recording media include MOs (Magneto-Optical disk), etc.

To distribute the program, portable recording media, such as DVDs and CD-ROMs, on which the program is recorded, may be put on sale. Alternatively, the program may be stored in the storage device of a server computer and may be transferred from the server computer to other computers through a network.

A computer which is to execute the above program stores in its local storage device the program recorded on a portable recording medium or transferred from the server computer, for example. Then, the computer reads the program from the local storage device, and runs the program. The computer may run the program directly from the portable recording medium. Also, while receiving the program being transferred from the server computer, the computer may sequentially run this program.

In addition, the above-described processing functions may also be implemented wholly or partly by using a digital signal processor (DSP), application-specific integrated circuit (ASIC), programmable logic device (PLD), or other electronic circuits.

According to one aspect, acoustic characteristics are predicted easily.

## Claims

1. A predicted value calculation method to be executed by a computer (1), the method comprising:
extracting component models (3a, 3d, 3e) having a connection relationship with a position (p) specified inside a predetermined component model (3a) from a plurality of component models (3a to 3g) which are hollow and are included in a three-dimensional model (2a) of a device to be designed, depending on whether each of the plurality of component models (3a to 3g) satisfies predetermined conditions on a cross-sectional area; and
calculating a predicted value (y) of acoustic characteristics of the extracted component models (3a, 3d, 3e).

2. The predicted value calculation method according to claim 1, wherein the extracting of the component models excludes, from being extracted, component models (3b, 3f) each having a part whose cross-sectional area is equal to less than a first threshold and whose length is equal to or greater than a second threshold.

3. The predicted value calculation method according to claim 2, wherein the extracting of the component models checks a component model (3b, 3d) adjacent to the predetermined component model (3a) inside which the position has been specified, prior to other component models, to determine whether the component model has the connection relationship, and excludes, from being excluded, all component models (3c, 3g) connected to the predetermined component model (3a) inside which the position has been specified, via the component models (3b, 3f) excluded from being extracted.

4. The predicted value calculation method according to claim 1, wherein the predicted value (y) is calculated by substituting a parameter (x) on the acoustic characteristics of the extracted component models in a predetermined calculation formula.

5. A computer program which causes a computer (1) to perform a procedure comprising:
extracting component models (3a, 3d, 3e) having a connection relationship with a position (p) specified inside a predetermined component model (3a) from a plurality of component models (3a to 3g) which are hollow and are included in a three-dimensional model (2a) of a device to be designed, depending on whether each of the plurality of component models (3a to 3g) satisfies predetermined conditions on a cross-sectional area; and
calculating a predicted value (y) of acoustic characteristics of the extracted component models (3a, 3d, 3e).

6. A design support apparatus (1) comprising:
extraction means (1a) for extracting component models (3a, 3d, 3e) having a connection relationship with a position (p) specified inside a predetermined component model (3a) from a plurality of component models (3a to 3g) which are hollow and are included in a three-dimensional model (2a) of a device to be designed, depending on whether each of the plurality of component models (3a to 3g) satisfies predetermined conditions on a cross-sectional area; and
calculation means (1b) for calculating a predicted value (y) of acoustic characteristics of the extracted component models (3a, 3d, 3e) extracted by the extraction means (1a).
